# EUROPEAN PATENT APPLICATION

(11) **EP 2 532 552 A2**
(43) Date of publication of application: **12.12.2012**
(21) Application number: 11179339.4
(22) Date of filing: 30.08.2011
(51) Int. Cl.: B60Q 1/08

(54) **System for controlling beam pattern of vehicle headlamp and method thereof**

(30) Priority: 09.06.2011 KR 20110055829
(71) Applicant: Hyundai Motor Company, Seoul 137-938 (KR)
(72) Inventor: You, Jung Keun, 441-704 Gyeonggi-do (KR)
(74) Representative: Isarpatent

(57) **Abstract**

A system and a method for controlling a beam pattern of a vehicle headlamp (300) using a navigation terminal are provided. The system for controlling a beam pattern of a vehicle headlamp, includes: a headlamp outputting light according to a preset beam pattern; and a control module (200) receiving vehicle information and traveling state information of a vehicle from a peripheral device (100) in a vehicle, determining a traveling zone mode and a passage system mode according to the vehicle information and traveling state information of a vehicle, and setting the beam pattern corresponding to the determined result.

## Description

### CROSS-REFERENCES TO RELATED APPLICATIONS

Priority to Korean patent application number 10-2011-0055829, filed on June 9, 2011 which is incorporated by reference in its entirety, is claimed.

### BACKGROUND OF THE INVENTION

### Field of the Invention

The present invention relates to a method for controlling a beam pattern of a vehicle headlamp and a method thereof, and more particularly, to a technology controlling and providing a beam pattern of a vehicle headlamp.

### Description of the Related Art

A headlamp for a vehicle is widely used during raining or at night. An angle of the headlamp should be controlled such that light of the headlamp is prevented from being directly transferred to a vehicle coming from an opposite lane and a peripheral pedestrian side not to cause dazzling in a driver.

### SUMMARY OF THE INVENTION

The present invention has been made in view of the above problems, and provides a system for controlling a beam pattern of a headlamp for a vehicle using vehicle location information and a method thereof.

In accordance with an aspect of the present invention, a system for controlling a beam pattern of a vehicle headlamp includes: a headlamp outputting light according to a preset beam pattern; and a control module receiving vehicle information and traveling state information of a vehicle from a peripheral device in a vehicle, determining a traveling zone mode and a passage system mode according to the vehicle information and traveling state information of a vehicle, and setting the beam pattern corresponding to the determined result.

The traveling zone mode includes at least one of a national road mode, a highway mode, a city mode, a corner mode, a crossroads mode, and a rain mode. The control module controls a beam pattern suited to a curved angle and a direction using the location information and steering information when the traveling zone mode is the corner mode. The passage system mode includes at least one of a left hand drive (LHD) mode and a right hand drive (RHD) mode. The control module sets beams pattern at a left side or a right side in the LHD mode and in the RHD mode to be opposite to each other. The control module includes a mode determining a traveling zone mode and a passage system mode according the location information and the traveling state information; a controller setting the beam pattern determined by at least one of an irradiating direction, irradiating brightness, and an irradiation output distance of the headlamp according to the determining result of the mode determining unit; and a vehicle information collecting information collecting the location information and the traveling state information. The control module includes a memory storing presetting of the beam pattern corresponding to the location information and the traveling state information, and the controller selects at least of presetting of the beam pattern. The traveling state information includes at least one of vehicle speed information, steering information, and weather information. The peripheral device in a vehicle includes a navigation terminal.

In accordance with an aspect of the present invention, a method for controlling a beam pattern of a vehicle headlamp includes: collecting traveling state information and vehicle location information by a control module; determining a traveling zone mode using the traveling state information and the vehicle location information by the control module; determining a passage system mode using the vehicle location information by the control module; and setting a beam pattern corresponding to the determining results by the control module.

Determining a traveling zone mode includes determining at least one of a national road mode, a highway mode, a city mode, a corner mode, a crossroads mode, and a rain mode. Determining at least one includes controlling a beam pattern suited to a curved angle and a direction using the location information and steering information when the traveling zone mode is the corner mode. Traveling state information includes at least one of vehicle speed information, steering information, and weather information. Determining a passage system mode includes determining least one of a left hand drive (LHD) mode and a right hand drive (RHD) mode. A beams pattern in the LHD mode and a beam pattern in the RHD mode are located at a left side or a right side of a vehicle to be opposite to each other.

The present invention has following effects. First, the present invention checks a traveling zone mode of a vehicle more exactly using location information of the vehicle to improve control efficiencies of beam patterns by traveling zone modes. Second, because the present invention may control a beam pattern of a vehicle headlamp using navigation information according to a passage system mode, accident danger may be minimized when the vehicle moves to a zone having a different passage system.

### BRIEF DESCRIPTION OF THE DRAWINGS

The objects, features and advantages of the present invention will be more apparent from the following detailed description in conjunction with the accompanying drawings, in which:
FIG. 1 is a block diagram illustrating a configuration of a system for controlling a beam pattern of a vehicle headlamp according to an exemplary embodiment of the present invention;
FIG. 2 is a flowchart illustrating a method for controlling a beam pattern of a vehicle headlamp according to an exemplary embodiment of the present invention;
FIG. 3a to FIG. 3f are views illustrating beam patterns of a vehicle headlamp by traveling zone modes, respectively; and
FIG. 4a to FIG. 4f are views illustrating beam patterns of a vehicle headlamp by passage system modes, respectively.

### DETAILED DESCRIPTION OF EXEMPLARY EMBODIMENTS

Exemplary embodiments of the present invention are described with reference to the accompanying drawings in detail. The same reference numbers are used throughout the drawings to refer to the same or like parts. Detailed descriptions of well-known functions and structures incorporated herein may be omitted to avoid obscuring the subject matter of the present invention.

As used herein, the term "traffic means" refers to Sport Utility Vehicles (SUVs), buses, trucks, passenger cars including various commercial vehicles, motor vehicles such as watercrafts including various boats and ships or aircrafts, hybrid vehicles, electric vehicles, plug-in hybrid electric vehicles, hydrogen-powered vehicles, and vehicles using fuels other than gasoline. In particular, the foregoing hybrid vehicle uses at least two resources (e.g., both gasoline and electric energy).

An adaptive vehicle headlamp system checks a traveling mode (highway mode or national road) of a vehicle using vehicle speed and a change value in steering wheel angle and provides different beam patterns of a headlamp by traveling modes to provide optimal traveling conditions. However, since the adaptive vehicle headlamp system checks a traveling mode of a vehicle using only the vehicle speed and a change value in a steering wheel speed, a check success rate of a traveling mode is low. Further, a beam pattern of the vehicle headlamp system should be changed according to a traffic system. A technology providing a changed beam pattern according to change in a current traffic system has not been provided.

That is, the traffic system is divided into a left hand drive (LHD) system and a right hand drive (RHD) according to a location of a driver's seat in a vehicle. Since a driver' seat is located at a left side in a vehicle in the LHD system, a traffic system is set such that the vehicle travels through a right lane based on a divided road.

Since a driver' seat is located at a left side in a vehicle in the RHD system, a traffic system is set such that the vehicle travels through a right lane based on a divided road. There are Korea, USA, Ghana, Italy, Argentina, and Germany as examples of nations using the LHD system, whereas there are United Kingdom, New Zealand, and Japan using the RHD system.

In a general, the LHD system is used, a left angle of the headlamp is set to be lower than a right angel of the headlamp to reduce dazzling in a driver of a vehicle approaching from an opposite lane.

However, when a vehicle moves from a nation using the LHD system to a nation using the RHD system (moves from France to United Kingdom through strait of Dover), it travels a right lane and then converts the lane from the right lane to a left lane. When a beam pattern applied to the LHD system is used unchanged, dazzling may be applied to a driver of a vehicle approaching from an opposite line to cause accident danger.

The present invention control a beam pattern of a vehicle headlamp according to a travel zone mode (highway mode, city centre mode, nation road mode, crossroads mode, corner mode, and the like) and a passage system mode (LHD mode and RHD mode) using a navigation system.

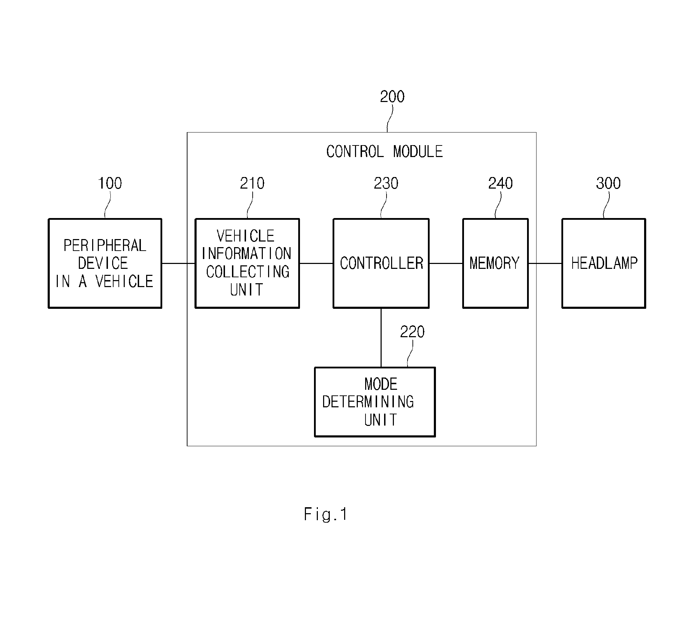

Hereinafter, a system and a method for controlling a beam pattern of a vehicle headlamp according to an embodiment of the present invention will be described with reference to FIG. 1 to FIG. 4f in detail. FIG. 1 is a block diagram illustrating a configuration of a system for controlling a beam pattern of a vehicle headlamp according to an exemplary embodiment of the present invention.

A system for controlling a beam pattern of a vehicle headlamp according to an embodiment of the present invention includes a peripheral device 100 in a vehicle, a control module 200, and a headlamp 300.

The peripheral device 100 in a vehicle provides location information of a vehicle to the control module 200 through Controller Area Network (CAN) communication based on map data. The peripheral device 100 in a vehicle includes a navigation terminal.

The headlamp irradiates light according to a beam pattern controlled by the control module 200. At this time, the beam pattern is determined according to at least one of change in brightness of light, change in an output distance, or change in a direction.

The control module 200 controls a beam pattern of a vehicle headlamp 300 according to a mode (highway mode, city centre mode, national mode, crossroads mode, corner mode) travel zone where a vehicle is located and a passage system mode (LHD mode or RHD mode) using location information of the vehicle received from the peripheral device in a vehicle.

Here, the LHD mode refers to a mode in which a driver' seat is located at a left side in a vehicle and the vehicle travels through a right lane based on a divided road. The RHD mode refers to a mode in which a driver' seat is located at a right side in the vehicle and the vehicle travels through a left lane based on a divided road.

To do this, the control module 200 includes a vehicle information collecting unit 210, a mode determining unit 220, a controller 230, and a memory 240.

The vehicle information collecting unit 210 collects vehicle location information from the peripheral device 100, vehicle speed information from a transmission or an engine control unit (ECU)(not shown), a change value in a steering wheel angle form a steering wheel angle sensor (not shown), or weather information from a rain sensor (not shown) or a wiper sensor (not shown).

The mode determining unit 220 determines a vehicle location zone mode using vehicle speed, a change value in a steering wheel angle, weather information and location information, and determines a passage system mode using vehicle location information and passage system information stored in the memory 240.

**[Table1]**

| Mode | Weather information | Vehicle information | Change value in steering wheel angle | Location information |
|---|---|---|---|---|
| Downtown | X | 0∼55KPH | More than 3 times for 5 minutes | Downtown |
| General road(Natio nal road) | X | 55∼85KPH | Rotating angle greater than 20° | General road |
| Highway | X | Average greater than 85KPH | Rotating angle less than 15° | Highway |
| Rain mode | 0 | X | X | X |
| Corner mode | X | 5KPH | Greater than 40° | Slope road |
| Crossroad s mode | X | 5KPH | X | Crossroads |

The table 1 lists reference information of vehicle information by vehicle location traveling zone modes. As illustrated in table 1, when vehicle speed is greater than an average 85KPH, a rotating angle is less than 15°, and location information is a highway, the mode determining unit 220 determines a current mode as a highway mode. The mode determining unit 220 determines a travel zone mode based on vehicle speed information, a change value in a steering wheel angle and location information, thereby increasing accuracy in determining a traveling zone mode.

Further, the mode determining unit 220 fetches passage system information stored in the memory 250 to check passage system information of a current vehicle location, and recognizes and determines an LHD mode and an RHD mode. Here, the foregoing embodiment has illustrated that the mode determining unit 220 recognizes a passage system information mode using passage system information previously stored in the memory 250. However, the mode determining unit 220 may fetch and use passage system information from the peripheral device 100.

The controller 230 previously stores beam pattern information by modes in the memory 240, and then controls the headlamp 300 according to the beam pattern information by modes stored in the memory 240 according to mode information determined by the mode determining unit 220. At this time, the memory 240 may include an ROM, a RAM, a CD-ROM, a magnetic tape, a floppy disc, and an optical data storage device, and be implemented by carrier wave (e.g., transmission through Internet).

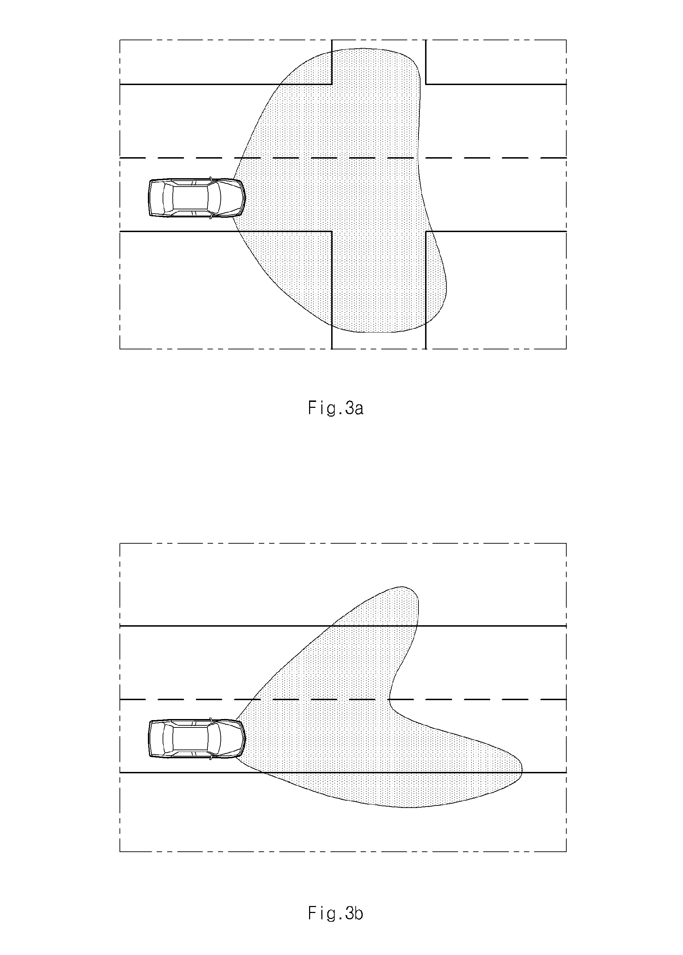

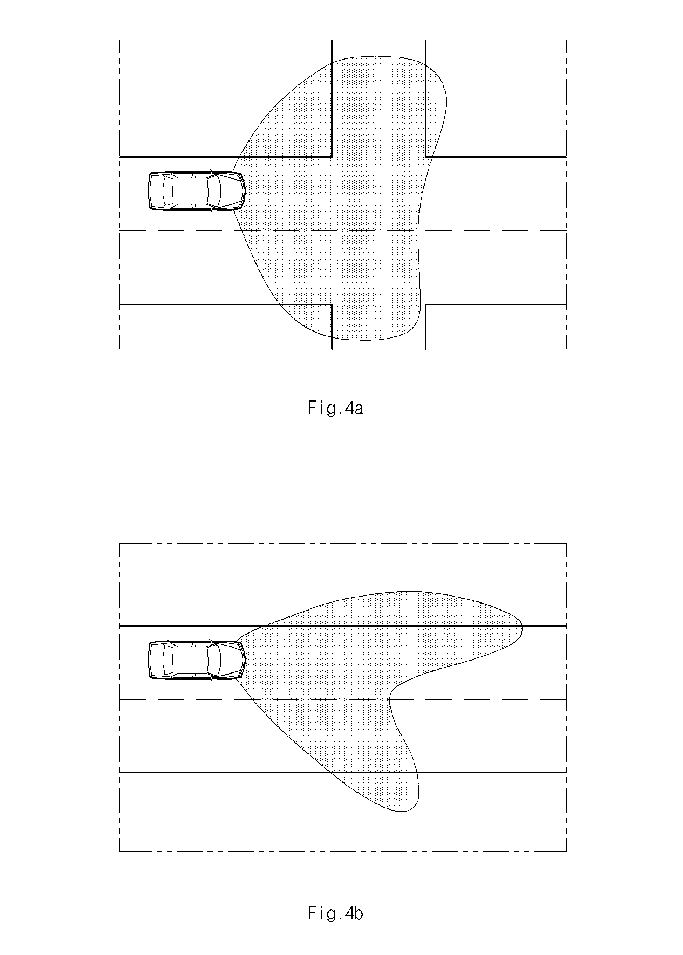

In this case, beam patterns by modes are illustrated in FIG. 3a to FIG. 4f. FIG. 3a to FIG. 3f illustrate examples of a beam pattern of a vehicle headlamp by modes when a vehicle travels through a right lane, respectively. FIG. 4a to FIG. 4f illustrate examples of beam pattern of a vehicle headlamp by modes when a vehicle travels to through a left lane, respectively.

FIG. 3a illustrates a case where a vehicle travels to a right lane at low speed using a beam pattern corresponding to a city traveling mode in an LHD mode. A right side of the beam pattern in FIG. 3a is formed to be wider than a left side of the beam pattern such that a driver easily sees pedestrians along the road.

FIG. 4a illustrates a case where a vehicle travels to a left lane at low speed. Since the road is located at a left side of the vehicle, a left side of the beam pattern in FIG. 4a is formed to be wider than a right side of the beam pattern. Accordingly, the beam pattern in FIG. 4a is formed at a left or right side of that in an LHD mode of FIG. 3a.

FIG. 3b illustrates a beam pattern in a case of a general national travel mode in an LHD mode, and a right beam pattern is formed to be longer than a left beam pattern. FIG. 4b illustrates a beam pattern corresponding to a general national traveling mode in an RHD mode, which is formed at a left or right side opposite to that of FIG. 3b.

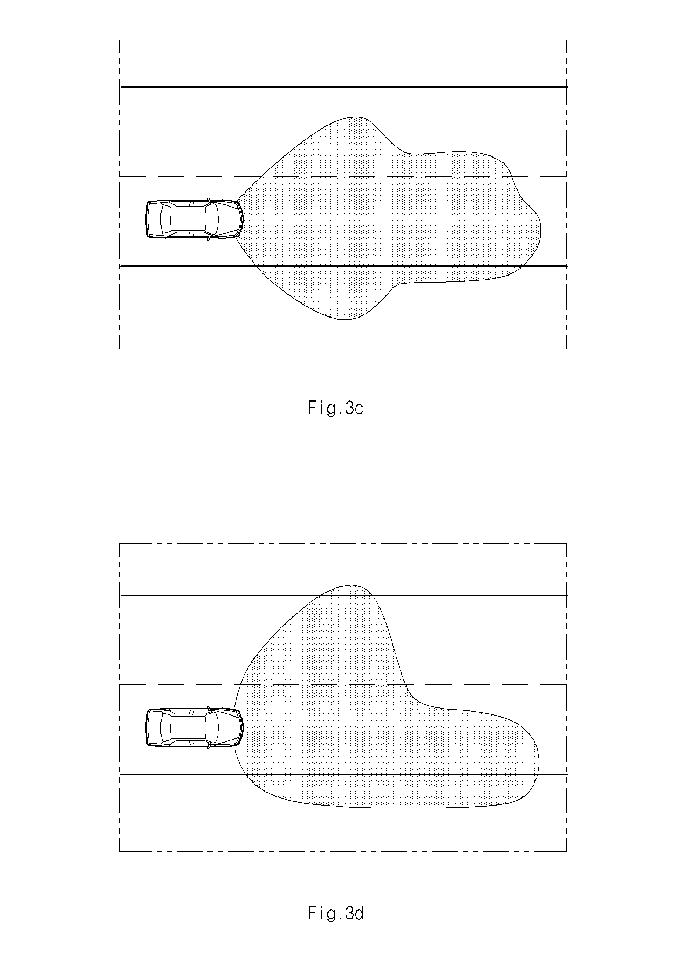

FIG. 3c illustrates a beam pattern corresponding to a highway traveling mode in an LHD mode. A right side of the beam pattern in FIG. 3c is formed to be wider than a left side thereof.

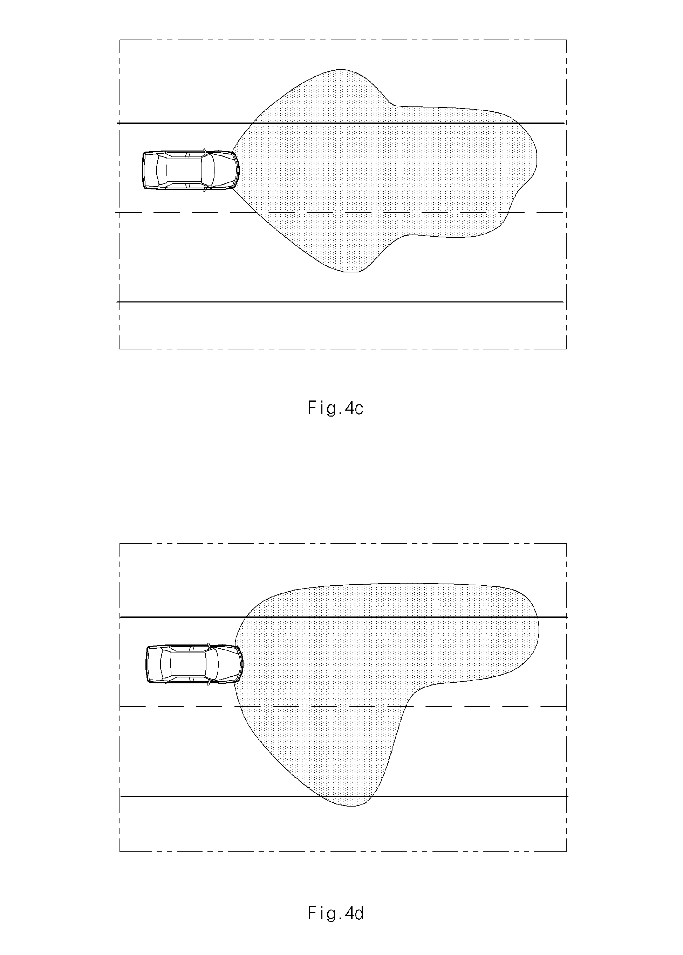

FIG. 4c illustrates a beam pattern corresponding to a highway traveling mode in an RHD mode, which is formed at a left or right side opposite to that of FIG. 3c.

FIG. 3d illustrates a beam pattern corresponding to a rain traveling mode in an LHD mode. A left side of the beam pattern in FIG. 3d is formed shorter and a right side thereof is formed longer. FIG. 4d illustrates a beam pattern corresponding to a rain traveling mode in an RHD mode, which is formed at a left or right side of that in FIG. 3d.

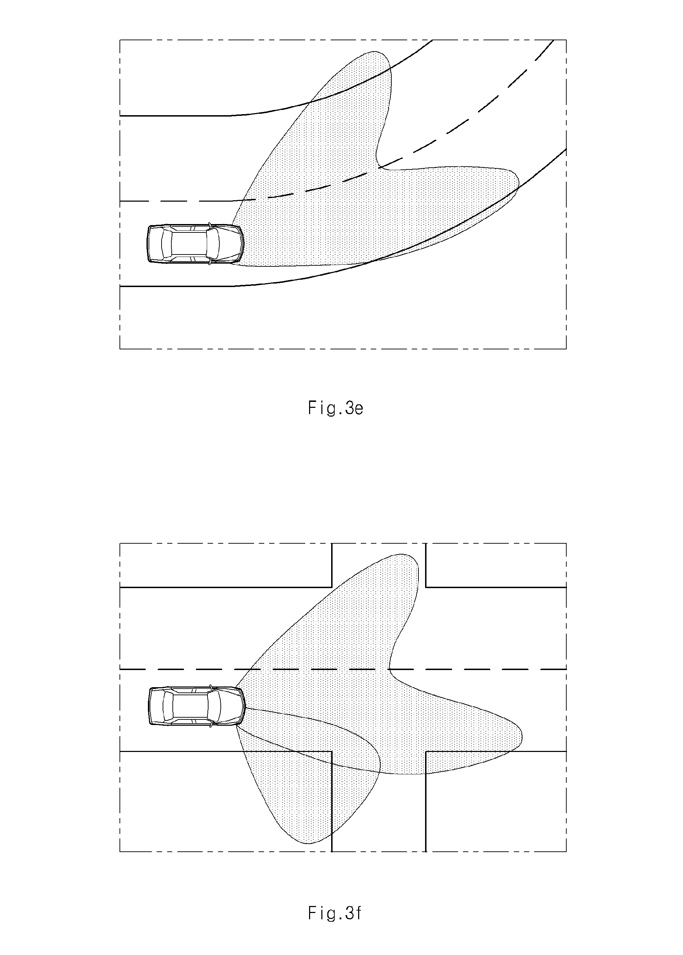

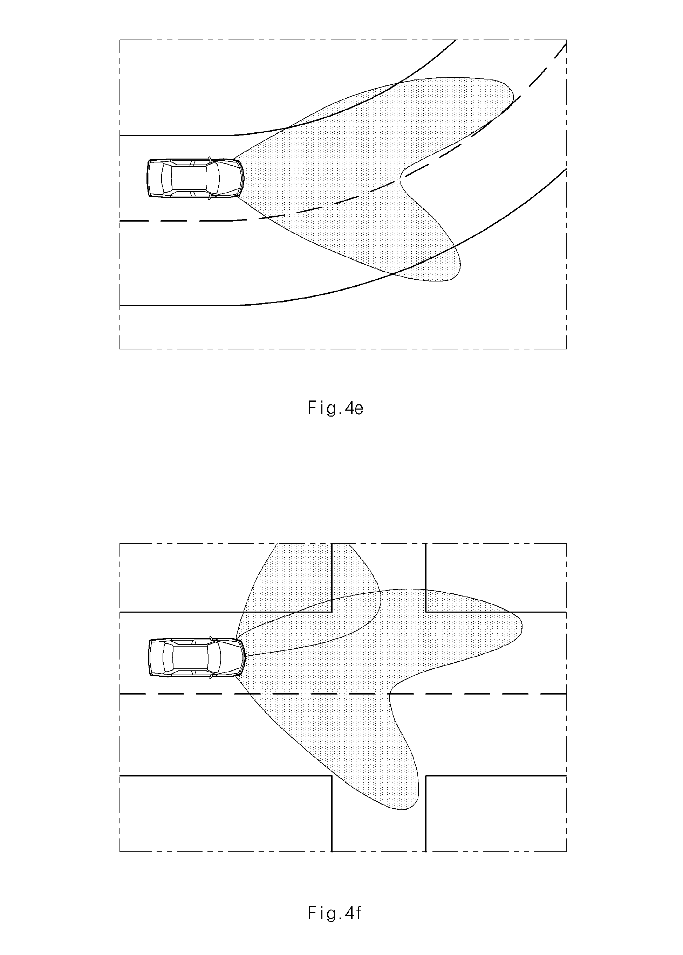

FIG. 3e illustrates a beam pattern corresponding to a corner traveling mode in an LHD mode. A right side of the beam pattern in FIG. 3e is formed to be longer than a left side thereof. FIG. 4e illustrates a beam pattern corresponding to a rain traveling mode in an RHD mode, which is formed at a left or right side opposite to that in FIG. 3e.

FIG. 3f illustrates a beam pattern corresponding to a crossroads traveling mode in an LHD mode. A right side of the beam pattern is formed to be longer than a left side thereof, and an assistant lamp is turned-on at the right side thereof to be widely formed. FIG. 4f illustrates a beam pattern corresponding to a crossroads traveling mode in an RHD mode, which is formed at a left or right side opposite to that in FIG. 3f. In particular, in a case of a corner mode, the beam pattern is controlled suited to a curved angle and direction using vehicle location information and a change value in a steering wheel angle.

As illustrated previously, beam patterns of a vehicle headlamp by modes when a vehicle goes to a left lane (RHD mode) are located at a left or right side opposite to those when the vehicle goes to a left lane (LHD mode).

At this time, although the foregoing embodiment is limited to beam patterns shown in FIG. 3a to FIG. 3f in an LHD system, they may be variously implemented according types of vehicle.

The memory 240 stores collected vehicle information, passage system information by location information of a vehicle, and beam pattern information by modes of a headlamp.

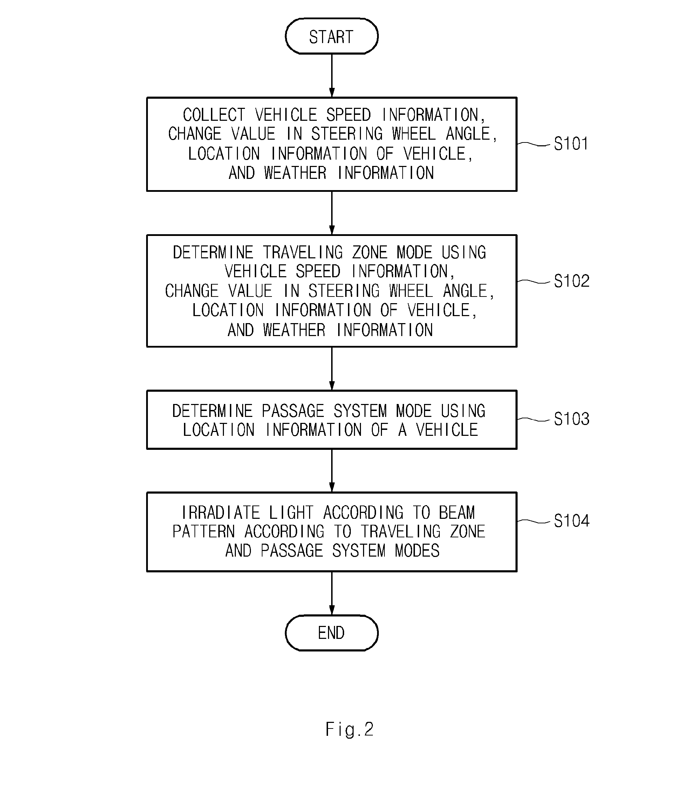

Hereinafter, a method for controlling a beam pattern of a vehicle headlamp will be described with reference to FIG. 2.

First, a vehicle information collecting unit 210 collects vehicle speed information, a change value in a steering wheel angle, location information of a vehicle, and weather information (S101).

Next, a mode determining unit 220 determines a traveling zone mode using the collected vehicle speed information, a change value in a steering wheel angle, location information of a vehicle, and weather information (S102), and determines a passage system mode using the collected location information of a vehicle (S103). At this time, the traveling zone mode refers to a city traveling mode, a highway mode, a general nation mode, a rain mode, a corner mode, or a crossroads mode, and the passage system mode refers to an LHD mode or an RHD mode.

Subsequently, the controller 230 controls a headlamp 300 to irradiate light according to a beam pattern according to the determined traveling zone mode and passage system mode (S104).

As illustrated above, the present invention may determine a traveling zone mode of a vehicle for providing a beam pattern of a vehicle headlamp using vehicle speed information, weather information, a change value in a steering wheel angle, and location information to increase accuracy in determining the traveling zone mode. Simultaneously, the present invention may determine a passage system mode of a traveling zone in a vehicle to provide a beam pattern rapidly corresponding to change in a passage system mode any time, thereby reduce accident danger.

Further, a method according to an embodiment of the present invention may be implemented as a code readable by a processor of a medium recording a program. There are ROM, RAM, CD-ROM, magnetic tape, floppy disc, and optical data storage device as examples of a program readable medium. The program readable medium includes an objected implemented by a form of a carrier wave (e.g., transmission through Internet).

Although exemplary embodiments of the present invention have been described in detail hereinabove, it should be clearly understood that many variations and modifications of the basic inventive concepts herein taught which may appear to those skilled in the present art will still fall within the spirit and scope of the present invention, as defined in the appended claims.

### SYMBOL OF EACH OF THE ELEMENTS IN THE FIGURES

100: Peripheral device in a vehicle
200: Control module
210: Vehicle information collecting unit
220: Mode determining unit
230: Controller
240: Memory
300: Headlamp

## Claims

1. A system for controlling a beam pattern of a vehicle headlamp, the system comprising:
a headlamp outputting light according to a preset beam pattern; and
a control module receiving vehicle information and traveling state information of a vehicle from a peripheral device in a vehicle, determining a traveling zone mode and a passage system mode according to the vehicle information and traveling state information of a vehicle, and setting the beam pattern corresponding to the determined result.

2. The system of claim 1, wherein the traveling zone mode comprises at least one of a national road mode, a highway mode, a city mode, a corner mode, a crossroads mode, and a rain mode.

3. The system of claim 2, wherein the control module controls a beam pattern suited to a curved angle and a direction using the location information and steering information when the traveling zone mode is the corner mode.

4. The system of claim 1, wherein the passage system mode comprises at least one of a left hand drive (LHD) mode and a right hand drive (RHD) mode.

5. The system of claim 4, wherein the control module sets beams pattern at a left side or a right side in the LHD mode and in the RHD mode to be opposite to each other.

6. The system of claim 1, wherein the control module comprises:
a mode determining a traveling zone mode and a passage system mode according the location information and the traveling state information;
a controller setting the beam pattern determined by at least one of an irradiating direction, irradiating brightness, and an irradiation output distance of the headlamp according to the determining result of the mode determining unit; and
a vehicle information collecting information collecting the location information and the traveling state information.

7. The system of claim 6, wherein the control module comprises a memory storing presetting of the beam pattern corresponding to the location information and the traveling state information, and the controller selects at least of presetting of the beam pattern.

8. The system of claim 6, wherein the traveling state information comprises at least one of vehicle speed information, steering information, and weather information.

9. The system of claim 1, wherein the peripheral device in a vehicle comprises a navigation terminal.

10. A method for controlling a beam pattern of a vehicle headlamp, the method comprising:
collecting traveling state information and vehicle location information by a control module;
determining a traveling zone mode using the traveling state information and the vehicle location information by the control module;
determining a passage system mode using the vehicle location information by the control module; and
setting a beam pattern corresponding to the determining results by the control module.

11. The method of claim 10, wherein determining a traveling zone mode comprises determining at least one of a national road mode, a highway mode, a city mode, a corner mode, a crossroads mode, and a rain mode.

12. The method of claim 11, wherein determining at least one comprise controlling a beam pattern suited to a curved angle and a direction using the location information and steering information when the traveling zone mode is the corner mode.

13. The method of claim 10, wherein the traveling state information comprises at least one of vehicle speed information, steering information, and weather information.

14. The method of claim 10, wherein determining a passage system mode comprises determining least one of a left hand drive (LHD) mode and a right hand drive (RHD) mode.

15. The method of claim 14, wherein a beams pattern in the LHD mode and a beam pattern in the RHD mode are located at a left side or a right side of a vehicle to be opposite to each other.
